# EUROPEAN PATENT SPECIFICATION

(11) **EP 2 019 774 B1**
(45) Date of publication and mention of the grant of the patent: **06.07.2011**
(21) Application number: 06753837.1
(22) Date of filing: 24.05.2006
(51) Int. Cl.: B64C 1/40, G10K 11/168, B32B 3/10, B32B 3/28

(54) **SOUND-ABSORBING INNER CLADDING OF AIRCRAFT**
SCHALLABSORBIERENDE INNENVERKLEIDUNG EINES FLUGZEUGS
REVÊTEMENT INTERNE INSONORISANT D'AVIONS

(43) Date of publication of application: 04.02.2009
(73) Proprietor: Airbus Operations GmbH, 21129 Hamburg (DE)
(72) Inventor: HÖTZELDT, Stephan, 28215 Bremen (DE); SCHINDLER, Oliver, 28207 Bremen (DE); ERFURTH, Steffen, 28357 Bremen (DE); OHLENDORF, Bernd, 28199 Bremen (DE)
(74) Representative: Kopf, Korbinian Paul
(86) International application number: PCT/EP2006/004944
(87) International publication number: WO 2007/134626

(56) References cited:
- EP-A1- 0 246 464
- WO-A-94/20292
- DE-A1- 1 535 736
- US-A- 3 481 427
- US-A- 4 339 018
- US-A- 5 547 737
- US-B1- 6 267 838

## Description

### Field of invention:

The invention relates to a sound-absorbing inner cladding of aircraft, comprising a three-dimensionally constructed core structure which is disposed between two cover layers which run substantially parallel to one another at a distance.

### Technolgical background:

Sandwich panels of fibre-reinforced plastic materials are generally used for the inner cladding of aircraft fuselage cells for reasons of saving weight and because of the high strength requirements. The sandwich panels used commonly have a honeycomb-shaped core structure which is provided with cover layers on both sides to form the sandwich panel. As a result of the honeycomb-shaped structure being covered with the cover layers on both sides, the sandwich panels have a plurality of repeated units which are closed in themselves, of small volume and therefore not capable of drainage.

In addition, sandwich panels are known whose core structures for example have a wavy, trapezoidal or triangular cross-sectional geometry. Core structures of this type comprise a plurality of channels running approximately parallel to one another, which are formed by folding the core structure material. Sandwich panels having this type of core structures are widely used, for example, in ship building and in automobile construction. Core structures of this type are also used in the packaging industry, for example, in the form of corrugated boards. A feature common to said core structures is that, in relation to core structures having honeycomb cores, these generally have continuous drainable channels whose flanks form flat surfaces.

In addition, core structures with continuous drainable channels are known wherein the flanks of the channels form no continuous flat surfaces. The flanks of the channels of these core structures are formed by a plurality of partial surfaces which adjoin one another at an angle of less than 180° and thus have zigzag-shaped channels or zigzag-shaped apex lines and base lines when viewed from above. In contrast to the core structures folded or structured in only one spatial direction, such as corrugated cardboard cores, for example, these core structures are folded in two spatial directions. Furthermore, core structures of this type are known which, when viewed from above, form approximately trapezoidal channels or trapezoidal apex lines and base lines.

The cover layers of sandwich panels are formed by so-called "prepregs". Prepregs are surface structures produced using resin-impregnated glass fibres or resin-impregnated carbon fibres. Alternatively, fabric mats made of carbon fibres or glass fibres may be impregnated with synthetic resin to form prepregs.

The core structures are manufactured, for example using Nomex^{®} paper, aluminium films or films made of aluminium alloys by folding, by forming waves or the like. The cover layers can be formed of prepregs with carbon fibres or of prepregs with glass fibres. Alternatively, both the cover layers and the core structures can be manufactured using a metal material, for example, using aluminium sheet, sheets of aluminium alloys, steel sheet or titanium sheet. Both the cover layers and the core structures can alternatively consist of a combination of metal materials with plastic materials.

The bonding of the cover layers to the core structure to form sandwich panels may be effected by means of bonding methods, for example, by gluing or by welding. In particular, the bonding may be effected depending on the material used by hot or cold adhesion methods in autoclaves as also by ultrasound, laser or spot welding.

In order to meet the increasingly higher requirements for sound protection in aircraft construction, however, in addition to high strength values, the sandwich panels used for inner claddings of aircraft must also have good sound damping properties.

In previously known embodiments of sandwich panels for inner claddings of aircrafts interiors no appreciable air exchange may be possible between the external environment and the interior region of the sandwich panel. However, the possibility of air exchange may be an essential prerequisite for a good sound transmission effect for this type of sandwich panel which in turn, in conjunction with an additional sound absorption layer, may be the prerequisite for a good sound damping effect. However, providing the possibility for air exchange between the external environment and the inner region of a sandwich panel may involve the risk of foreign bodies being incorporated and the penetration of moisture. The presence of foreign bodies and moisture in the known sandwich panels thus may involve an increased tendency to rotting and/or an increased susceptibility to corrosion during flight, for example, as a result of the cyclic stressing with condensing and re-freezing moisture which takes place there as a result of large external pressure and temperature fluctuations. In addition, permanent incorporation of foreign bodies inside the core structure may be undesirable, for reasons of weight among other things.

### Summary of the invention:

It is thus an object of the invention to provide a sound-absorbing inner cladding of aircraft which firstly has a sufficiently good sound absorption property as a result of the possibility of sound transmission through passages incorporated in the core structure and in the cover layers as far as a sound absorption layer, where at the same time, permanent incorporation of foreign bodies penetrating from outside and/or permanent retention of moisture which has penetrated in the area of the core structure is largely avoided.

According to the present invention, a sound absorbing inner cladding having the features of claim 1 is provided.

Since a plurality of passages for sound transmission are incorporated in the core structure and in both cover layers, at least in sections, where a sound absorption layer is disposed in at least part of an area of at least one cover layer, the possibility of air exchange and therefore of sound transmission may be provided between the external environment and the sandwich element so that an excellent sound absorption effect of the sandwich layer may be achieved in conjunction with the sound absorption layer. At the same time, the inner region of the sandwich element may be ventilated as a result of passages so that moisture which has penetrated unexpectedly from outside can evaporate again relatively rapidly before rotting processes or corrosion processes may take place in the inner area of the sandwich element.

The sound absorption layer may also improve the heat insulating properties of the sandwich element.

According to the present invention, the core structure between the cover layers comprises a plurality of through channels disposed adjacent to one another for the drainage of fluids and for flushing out foreign bodies. Within the channels, on the one hand, sound penetrating from outside through the passages is effectively passed through the interior region of the sandwich element and then absorbed in the sound absorption layer. On the other hand, the channels allow active cleaning of the inner region of the sandwich element from foreign bodies by a suitable, externally supplied cleaning agent, for example, in the form of water, or by passive self-cleaning by out-flowing water of condensation.

To form the inner cladding, the sandwich elements are preferably built in with a sufficient gradient so that a cleaning agent which enters through the passages or by means of the channels can flush out foreign bodies deposited in the core structure through the action of gravity in the course of active cleaning. In parallel with this, an independent, that is, passive cleaning of the sandwich element can optionally also be effected by the through channels acting in the fashion of gutters. During the self-cleaning process, any water of condensation flows off through the channels, entraining at least some, especially smaller and lighter foreign bodies, as it flows off into the outer region.

Thus, the passages in the core structure and in the cover layers in conjunction with the through channels of the core structure may make it possible to achieve a good sound absorption effect of the sandwich element according to the invention and may provide the possibility of being able to remove dirt particles which have undesirably been incorporated, by means of a suitable cleaning agent. Furthermore, as a result of the presence of the passages, moisture which has undesirably penetrated may evaporate and/or flow off as a result of the gradient of the built-in sandwich element by means of the channels formed inside the core structure.

According to exemplary embodiment of the present invention, the channels have flanks, wherein the flanks each form a continuous, substantially flat and/or curved surface. This makes the manufacture of the core structure simple and cost-effective. In addition, the flushing out of incorporated foreign bodies is made easier as a result of the rectilinear profile of the channels.

According to a further exemplary embodiment of the sandwich element according to the invention, the channels have flanks which are formed with a plurality of substantially flat and/or curved partial surfaces, wherein the partial surfaces adjoin one another at an angle of less than 180°.

By using this type of core structure, it may be possible to produce sandwich elements having higher mechanical strengths compared to sandwich elements formed with core structures merely having rectilinear channels. However, this type of core structure may be more complex to manufactures, more expensive and may also be more difficult to clean of foreign impurities.

According to a further exemplary embodiment of the sandwich element according to the invention, the core structure has a repetitive triangular, trapezoidal, triangular or wavy cross-sectional geometry. This configuration allows the sandwich element to be manufactured easily whilst at the same time having favourable mechanical properties. Previously known, pre-fabricated semi-finished products may be used in part.

According to a further exemplary embodiment of the invention, the passages in both cover layers in the core structure are disposed approximately uniformly spaced apart, especially in the manner of perforations. By this means, on the one hand, the passages can easily be produced in the cover layers and in the core structure, for example, by drilling, punching or the like. On the other hand, the configuration of the passages in the form of a perforation incorporated preferably over the entire area of the cover layers and the core structure may make it possible to achieve very effective sound absorption.

Further advantageous embodiment of the arrangement are present in the further claims.

### Short description of the drawings:

- Fig. 1: shows an isometric diagram of a sandwich element according to the invention,
- Fig. 2: shows an isometric exploded diagram of the sandwich element,
- Fig. 3: shows a plan view of a first exemplary embodiment of a core structure and
- Fig. 4: shows a plan view of a second exemplary embodiment of a core structure.

### Detailed description of exemplary embodiments:

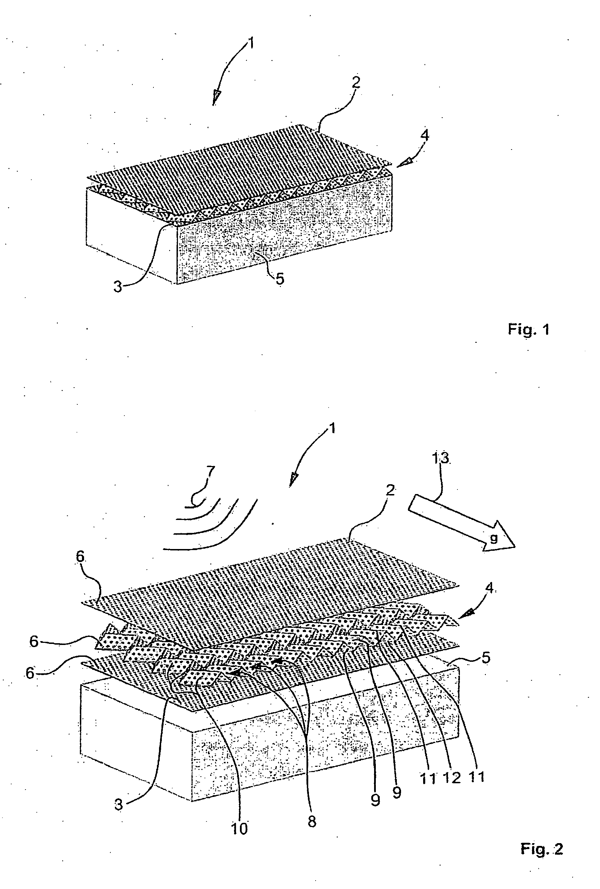

Figure 1 shows an isometric diagram of a sandwich element according to the invention. A sandwich element 1 comprises, amongst other things, two cover layers 2, 3 which are applied to both sides of a core structure 4. Applied to the side of the cover layer 3 facing away from the core structure 4 is a sound absorption layer 5 to achieve the desired high sound absorption effect of the sandwich element 1. In addition, the sound absorption layer 5 also enhances the heat insulating capacity of the sandwich element 1 according to the invention.

Figure 2 shows an isometric exploded diagram of the sandwich element according to the invention.

The sandwich element 1 comprises, amongst other things, the core structure 4 with the cover layers 2, 3 applied to both sides. The sound absorption layer 5 is applied to the lower side of the cover layer 3. A plurality of passages 6 are incorporated both in the cover layers 2, 3 and also in the core structure 4.

For reasons of better clarity of the drawing, in the diagram in Fig. 2 only three representative passages 6 in the area of the cover layer 2, the cover layer 3 and the core structure 4 have been provided with a reference number. The remaining passages not designated in detail are constructed identically.

The passages 6 are constructed in the form of through holes which are incorporated in the cover layers 2, 3 and in the core structure 4 preferably distributed uniformly with respect to one another. In the exemplary embodiment shown the passages are incorporated in the cover layers 2, 3 and the core structure 4 in matrix fashion in the form of a full-area perforation. Especially for an effective sound absorption effect of the sandwich element 1, the passages 6 pass through the entire material thickness of the cover layers 2, 3 and the material thickness of the core structure 4. Unlike the diagram in Fig. 2, the passages 6 can have a configuration which differs from cylindrical geometry. The passages 6 allow very efficient transmission of the sound 7 impinging upon the sandwich element 1 through the cover layers 2, 3 and the core structure 4 where the energy of the sound 7 is then largely converted by dissipation into heat in the sound absorption layer 5.

In addition, the core structure 4 has a plurality of adjacent channels 8. For the sake of clarity, in the diagram in Fig. 2 only three channels representative of the remaining channels of the core structure have been provided with reference numbers. The channels 8 are formed by respectively two flanks 9 of which only two which are representative of the remaining flanks , have been provided with a reference number in Fig. 1. The flanks not provided with a reference number are constructed identically to the two provided with a reference number.

In the core structure 4 the flanks 9 do not form a continuous surface. Rather, the flanks 9 are formed by a plurality of partial surfaces 10 which each adjoin one another at an angle of less than 180° and thus form substantially zigzag-shaped channels 8. The partial surfaces 10 each form a substantially flat and/or curved surface when considered by itself. In this case, the channels 8 or the flanks 9 each have a substantially zigzag-shaped apex line or base line 11, 12. Of the apex lines 11 or the base lines 12, only three, representative of the remainder, have been provided with a reference number.

In the exemplary embodiment shown, the channels 8 have a substantially triangular cross-sectional geometry which is repeated continuously over the entire length of the sandwich element 1. The zigzag-shaped channels 8 allow the formation of a core structure 4 having high mechanical strengths. In contrast hereto, core structures which merely have structuring or folding in one spatial direction such as, for example, corrugated cardboard cores, trapezoidal core structures, single folded cores or the like, have lower mechanical strength values.

The sandwich element 1 according to the invention may be built in to form inner claddings in aircraft such that in the final built-in position the channels 8 run substantially parallel to an arrow 13 which indicates the direction of the action of gravity. This built-in position is preferably to be selected so that undesirable foreign bodies which have penetrated into the core structure 4 through the passages 6, can be conveyed out of the core structure again, for example, by active flushing using a cleaning agent or by passive flushing by means of residual water of condensation. At least, care should be taken to ensure that the channels 8 have a sufficient gradient in relation to the horizontal or a sufficient slope to ensure adequate (self-) cleaning of the core structure 4 from foreign bodies which have penetrated therein. Water to which suitable cleaning aids are optionally added, for example, can be used as cleaning agent.

The sound absorption layer 5 may be arranged over the entire area or applied thereto underneath the cover layer 3. The sound absorption layer 5 is used firstly to achieve the desired sound absorption effect of the sandwich element 1 and at the same time as a heat insulating layer. Depending on the area of application, a possibly sufficient sound absorption effect may also be achieved by means of the sandwich element 1 according to the invention without the presence of the additional sound absorption layer 5. Alternatively, it is also possible to apply the sound absorption layer 5 merely in sections to the cover layer 3. The sound absorption layer 5 can furthermore be arranged at a distance from the cover layer 3 of the sandwich element 1: In this case, an intermediate air space exists between the cover layer 3 and the sound absorption layer 5.

The sound absorption layer 5 may, for example be formed using glass or mineral wool. Alternatively, the sound absorption layer 5 may also be formed using a spun yam of fine metal fibres, carbon fibres, plastic fibres and using open-pore foamed plastics.

The core structure 4 may be formed using a plastic material, for example, using epoxy resin-impregnated Nomex^{®} paper. Alternatively, the core structure 4 may also be formed using a metal alloy, for example, using aluminium, using an aluminium alloy, using steel or titanium. The core structure 4 may be produced, for example, by multiple folding or another type of structuring of a surface plastic material or a metal surface material.

The core structure 4 may have a geometrical configuration which differs from the triangular cross-sectional geometry shown. For example, rectangular, trapezoidal or wavy cross-sectional geometries of the core structure 4 are possible. In a triangular, rectangular or trapezoidal cross-sectional geometry of the core structure 4, for example, a plurality of angles of inclination or radii of curvature are possible for the flanks 9 in relation to the horizontal.

The cover layers 2, 3 may likewise be formed using a composite material, for example, using carbon-fibre-reinforced prepregs made of epoxy resin or using a metal material. Aluminium, an aluminium alloy, steel or titanium in particular can be considered as metal material. Furthermore, the cover layers 2, 3 may be formed using a foamed plastic material or using metal foams which are preferably constructed as open-pored. In addition, both the cover layers 2, 3 and also the core structure 4 may be formed using any combination of composite materials and/or metal materials, especially according to the type described previously.

For reasons of weight, the material thicknesses of the cover layers 2, 3 and the core structure 4 have relatively low values. The material thickness of the cover layers 2, 3 may be less than 10 mm and the height of the core structure 4 may be less than 50 mm. The sound absorption layer 5 may have a material thickness of less than 100 mm. The passages 6 in the cover layers 2, 3 and the core structure 4 may be formed by means of known methods, that is for example by drilling, by stamping, by laser drilling or the like. The passages 6 in the cover layers 2, 3 and the core structure 4 may have a cylindrical geometry which may be easy to produce, having a diameter of less than 20 mm. Furthermore, in alternative embodiments cross-sectional geometries of the passages 6 which differ from a cylindrical geometry may also be possible.

The mechanical bonding of the cover layers 2, 3 to the core structure 4 and the sound absorption layer 5 optionally provided is effected in each case depending on the type of materials to be bonded using known bonding methods, such as for example hot- or cold-setting adhesive methods or general welding methods. Alternatively, the bonding can be effected by riveting, adhesive tape or the like.

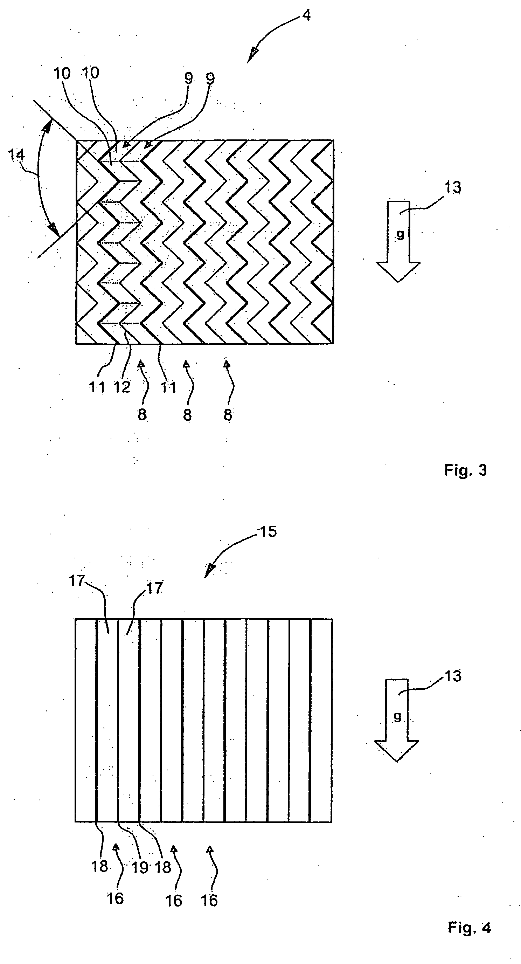

Figure 3 shows a plan view of a first exemplary embodiment of a core structure.

The core structure 4 forms a plurality of adjacent channels 8 having a zigzag structure when viewed from above. For better clarity, only three representative channels 8 have a reference number. The remaining channels are constructed identically to these. For reasons of better clarity of the drawing, the passages in the core structure 4 are not shown.

Any water of condensation or cleaning agent which has additionally been introduced may flow out from the channels 8 in the direction of the arrow 13 which symbolises the direction of the action of gravity and at the same time, any foreign bodies which have penetrated into the core structure 4 can be flushed out from the channels 8. The channels 8 also have a plurality of flanks 9 of which only two, representative of the remainder, are provided with reference numbers. The channels 8 each have respectively one apex line 11 and a base line 12 which each have an approximately zigzag-shaped profile and run approximately uniformly spaced from one another. The flanks 9 are formed by a plurality of partial surfaces 10 which each adjoin one another at an angle 14 having a value of less than 180° to form the flanks 9. In the diagram in Fig. 3 the angle 14, for example, has a value of about 90°. Different values for the angle 14 are also possible to form alternative embodiments of core structures. In principal, smaller values for the angle 12 facilitate the flow of condensation and/or cleaning agents which have additionally been introduced, from the channels 8 in the direction of the arrow 11, although the attainable mechanical strength decreases.

In another exemplary embodiment, which is not shown, the apex lines 11 and the base lines 12 of the core structure 4 each have a substantially trapezoidal, repeating profile. Other geometrical profiles of the apex lines 11 and base lines 12 of the core structure 4 are likewise possible.

In addition, the apex lines 11 and the base lies 12 of the channels 8 can have almost any feasible, for example, wavy, curved or washboard-like geometrical shape other than the zigzag-shaped profile illustrated in Fig. 3, whereby in conjunction with the possibilities for forming the cross-sectional geometries of the core structure 4 indicated, an almost unlimited range of variation of the design of three-dimensional core structures 4 with through channels 8 is obtained. In this connection, for example, it is feasible to have a profile of apex lines 11 or base lines 12 corresponding to a plurality of semicircles arranged in rows.

In a core structure 4 having a wavy cross-sectional geometry and also having wavy apex lines 11 and base lines 12, the channels 8 can be formed, for example by a sectional compression or stretching of the material used to form the core structure 4. This procedure is especially possible for metallic materials, especially using aluminium or aluminium alloys.

Figure 4 shows a plan view of a second exemplary embodiment of a core structure with rectilinear channels.

The core structure 15 is formed by a plurality of substantially rectilinear channels 16 arranged adjacent to one another, each having an approximately rectangular cross-sectional geometry. For reasons of better clarity of the drawing, the passages in the core structure 15 are not shown in detail. In this embodiment of the core structure 15 the flanks 17 each form substantially flat surfaces. The channels each have apex lines 18 and base lines 19.

As a result of the substantially rectilinear formation of the channels 16, in this embodiment of the core structure 15 any water of condensation can easily flow out from the channels 16 in the direction of the arrow 13 and at the same time flush out any foreign bodies which have been incorporated. The same applies to any cleaning agent which has additionally been introduced into the core structure 15, such as water with suitable cleaning additions or the like. Compared with the core structure 4 according to Fig. 3, only inferior mechanical strengths can be achieved although the manufacturing expenditure is reduced.

As a result of the excellent sound absorption properties, the sandwich element according to the invention may be suited to the formation of inner claddings in aircraft. In this case, an almost arbitrary range of variation of core structures with respectively different geometrical configurations can be used, a configuration comprising three-dimensional, drainable and therefore through channels being common to the core structures.

### REFERENCE LIST

- 1: Sandwich element
- 2: Cover layer
- 3: Cover layer
- 4: Core structure
- 5: Sound absorption layer
- 6: Passage
- 7: Sound
- 8: Channel
- 9: Flank
- 10: Partial surface
- 11: Apex line
- 12: Base line
- 13: Arrow
- 14: Angle
- 15: Core structure
- 16: Channel
- 17: Flank
- 18: Apex line
- 19: Base line

## Claims

1. A sound-absorbing inner cladding of aircraft, fuselage cells the cladding comprising:
a three-dimensionally constructed core structure (4, 15) which is bonded between two cover layers (2, 3) which run substantially parallel to one another at a distance;
wherein a plurality of passages (6) for sound transmission, disposed in a form of through-holes, are incorporated respectively in the core structure (4, 15) and in both cover layers (2, 3);
wherein the core structure (4, 15) comprises a plurality of through channels (8, 16) disposed adjacent to one another and parallel to the cover layers (2, 3);
wherein the trough channels (8, 16) are adapted for drainage of fluids and for flushing out foreign bodies;
and wherein at least one sound absorption layer (5) is disposed in at least part of an area of a cover layer (2, 3).

2. The cladding according to claim 1, wherein the channels (16) have flanks (17);
wherein the flanks (17) each form a continuous, substantially flat and/or curved surface.

3. The cladding according to claim 1 or claim 2, wherein the channels (8) have flanks (9) which are formed with a plurality of substantially flat and/or curved partial surfaces (10), wherein the partial surfaces (10) adjoin one another at an angle (14) of less than 180°.

4. The cladding according to any one of claims I to 3, wherein the core structure (4, 15) has a repetitive triangular, trapezoidal, rectangular or wavy cross-sectional geometry.

5. The cladding according to any one of claims 1 to 4, wherein the passages (6) are especially constructed as cylindrical, elliptical or polygonal openings.

6. The cladding according to any one of claims 1 to 5, wherein the sound absorption layer (5) is constructed as thermally insulating.

7. The cladding according to any one of claims 1 to 6, wherein the core structure (4, 15) and/or the cover layers (2, 3) are formed with a plastic material.

8. The cladding according to any one of claims 1 to 7, wherein the core structure (4, 15) and/or the cover layers (2, 3) are formed with a fibre-reinforced plastic material.

9. The cladding according to any one of claims 1 to 8, wherein the core structure (4, 15) and/or the cover layers (2, 3) are formed with a metal material.

## Patentansprüche

1. Schallabsorbierende Innenverkleidung von Flugzeugrumpfzellen, wobei die Verkleidung aufweist:
eine dreidimensional ausgebildeten Kernstruktur (4, 15), die zwischen zwei im Wesentlichen parallel zueinander beabstandet verlaufenden Deckschichten (2, 3) gebondet ist,
wobei in die Kernstruktur (4, 15) und/oder in beiden Deckschichten (2, 3) eine Vielzahl von Durchgängen (6) zur Schalltransmission in Form von Durchgangslöchern eingebracht ist,
wobei die Kernstruktur (4, 15) eine Vielzahl von durchgehenden und nebeneinander und
parallel zu den Deckschichten (2, 3) angeordneten Kanälen (8, 16) aufweist, die zur Drainage von Fluiden und zum Herausspülen von Fremdkörpern ausgelegt sind,
und wobei in einem Bereich einer Deckschicht (2, 3) zumindest bereichsweise mindestens eine Schallabsorptionsschicht (5) angeordnet ist.

2. Verkleidung nach Anspruch 1, wobei die Kanäle (16) Flanken (17) aufweisen,
wobei die Flanken (17) jeweils eine durchgängige, im Wesentlichen ebene und/oder gekrümmte Fläche bilden.

3. Verkleidung nach Anspruch 1 oder Anspruch 2,wobei die Kanäle (8) Flanken (9) aufweisen, die mit einer Vielzahl von im Wesentlichen ebenen und/oder gekrümmten Teilflächen (10) gebildet sind, wobei die Teilflächen (10) unter einem Winkel (14) von weniger als 180° aneinander anschließen.

4. Verkleidung nach einem der Ansprüche 1 bis 3, wobei die Kernstruktur (4, 15) eine sich wiederholende dreieckförmige, trapezförmige, rechteckförmige oder wellenförmige Querschnittsgeometrie aufweist.

5. Verkleidung nach einem der Ansprüche 1 bis 4, wobei die Durchgänge (6) insbesondere als zylindrische, elliptische oder vieleckige Öffnungen ausgebildet sind.

6. Verkleidung nach einem der Ansprüche 1 bis 5, wobei die Schallabsorptionsschicht (5) thermisch isolierend ausgebildet ist.

7. Verkleidung nach einem der Ansprüche 1 bis 6, wobei die Kernstruktur (4, 15) und/oder die Deckschichten (2, 3) mit einem Kunststoffmaterial gebildet sind.

8. Verkleidung nach einem der Ansprüche 1 bis 7, wobei die Kernstruktur (4, 15) und/oder die Deckschichten (2, 3) mit einem faserverstärkten Kunststoffmaterial gebildet sind.

9. Verkleidung nach einem der Ansprüche 1 bis 8, wobei die Kernstruktur (4, 15) und/oder die Deckschichten (2, 3) mit einem metallischen Material gebildet sind.

## Revendications

1. Revêtement intérieur insonorisant de cellules de fuselage d'avion, le revêtement comportant :
une structure de coeur construite de manière tri-dimensionnelle (4, 15) qui est fixée entre deux couches de couverture (2, 3) qui s'étendent sensiblement parallèles l'une à l'autre à une certaine distance,
dans lequel une pluralité de passages (6) pour la transmission du son, disposés sous une forme de trous traversants, est incorporée respectivement dans la structure de coeur (4, 15) et dans les deux couches de couverture (2, 3),
dans lequel la structure de coeur (4, 15) comporte une pluralité de canaux traversants (8, 16) disposés adjacents les uns aux autres et parallèles aux couches de couverture (2, 3),
dans lequel les canaux traversants (8, 16) sont adaptés pour l'écoulement de fluides et pour chasser des corps étrangers,
et dans lequel au moins une couche d'insonorisation (5) est disposée dans au moins une partie d'une zone de la couche de couverture (2, 3).

2. Revêtement selon la revendication 1, dans lequel les canaux (16) ont des flancs (17), les flancs (17) formant chacun une surface continue, sensiblement plate et/ou courbe.

3. Revêtement selon la revendication 1 ou 2, dans lequel les canaux (8) ont des flancs (9) qui sont formés d'une pluralité de surfaces partielles sensiblement plates et/ou courbes (10), dans lequel les surfaces partielles (10) sont adjacentes les unes aux autres à un angle (14) inférieur à 180°.

4. Revêtement selon l'une quelconque des revendications 1 à 3, dans lequel la structure de coeur (4, 15) a une géométrie de section transversale répétitive triangulaire, trapézoïdale, rectangulaire ou ondulée.

5. Revêtement selon l'une quelconque des revendications 1 à 4, dans lequel les passages (6) sont spécialement construits sous forme d'ouvertures cylindriques, elliptiques ou polygonales.

6. Revêtement selon l'une quelconque des revendications 1 à 5, dans lequel la couche d'insonorisation (5) est construite pour être thermiquement isolante.

7. Revêtement selon l'une quelconque des revendications 1 à 6, dans lequel la structure de coeur (4, 15) et/ou les couches de couverture (2, 3) sont formées avec une matière plastique.

8. Revêtement selon l'une quelconque des revendications 1 à 7, dans lequel la structure de coeur (4, 15) et/ou les couches de couverture (2, 3) sont formées avec une matière plastique renforcée par des fibres.

9. Revêtement selon l'une quelconque des revendications 1 à 8, dans lequel la structure de coeur (4, 15) et/ou les couches de couverture (2, 3) sont formées avec un matériau métallique.
